# EUROPÄISCHE PATENTSCHRIFT

(11) **EP 1 848 901 B1**
(45) Veröffentlichungstag und Bekanntmachung des Hinweises auf die Patenterteilung: **08.07.2009**
(21) Anmeldenummer: 06706985.6
(22) Anmeldetag: 16.02.2006
(51) Int. Cl.: F16H 59/02

(54) **VORRICHTUNG UND VERFAHREN ZUR STEUERUNG EINES AUTOMATISCHEN GETRIEBES IN EINEM KRAFTFAHRZEUG**
DEVICE AND METHOD FOR CONTROLLING AN AUTOMATIC TRANSMISSION IN A MOTOR VEHICLE
PROCEDE ET DISPOSITIF POUR COMMANDER UNE BOITE AUTOMATIQUE DANS UN VEHICULE A MOTEUR

(30) Priorität: 17.02.2005 DE 102005007128
(43) Veröffentlichungstag der Anmeldung: 31.10.2007
(73) Patentinhaber: ZF Friedrichshafen AG, 88038 Friedrichshafen (DE)
(72) Erfinder: WOLF, Andreas, 88213 Ravensburg (DE); MÜLLER, Lutz, 88634 Herdwangen-Schönach (DE); KRAMER, Rupert, 88048 Friedrichshafen (DE); LOCHARD, Jérome, 88045 Friedrichshafen (DE); BURKHART, Michael, 88690 Uhldingen-Mühlhofen (DE)
(86) Internationale Anmeldenummer: PCT/EP2006/001383
(87) Internationale Veröffentlichungsnummer: WO 2006/087187

(56) Entgegenhaltungen:
- DE-A1- 3 201 440
- DE-A1- 10 311 638
- DE-A1- 19 736 406

## Beschreibung

Die Erfindung betrifft eine Vorrichtung und ein Verfahren zur Steuerung eines automatischen Getriebes in einem Kraftfahrzeug gemäß dem Oberbegriff des Patentanspruchs 1. Das Dokument DE 3 201 440 A1 enthält alle Merkmale dieses Oberbegriffs. Die Erfindung betrifft ferner ein Verfahren gemäß Anspruch 14 zur Steuerung eines automatischen Getriebes mittels einer erfindungsgemäß ausgebildeten Vorrichtung.

Es ist bekannt, dass automatische Getriebe für Kraftfahrzeuge sich so steuern lassen, dass diese vollautomatisch oder manuell betätigt ihr Übersetzungsverhältnis ändern. Beim manuellen Betreiben kann der Fahrer den gewünschten Gang üblicherweise durch Betätigung eines Wählhebels vorgeben. Dies kann vorteilhaft sein, wenn im vollautomatischen Betrieb aus der Sicht des Fahrers befriedigende Fahreigenschaften des Fahrzeuges nicht erreichbar sind.

Eine Umschaltung vom vollautomatischen in einen manuellen Betrieb kann jedoch beispielsweise dann nachteilig sein, wenn ein möglichst geringer Kraftstoffverbrauch erzielt werden soll. Vom Fahrer erfordert es insbesondere bei Nutzfahrzeugen viel Erfahrung und Disziplin, durch manuelle Gangwahl einen optimal niedrigen Kraftstoffverbrauch zu erzielen. Sind diese Voraussetzungen nicht gegeben, kann dieser Umstand besonders für ein Fuhrparkunternehmen wirtschaftlich nachteilig sein. Wird hingegen nur ein vollautomatischer Betrieb eines Fahrzeuggetriebes erlaubt, so ist die Flexibilität des Fahrers stark eingeschränkt. Auch dies kann für den Fahrer unvorteilhaft bzw. für das Unternehmen wirtschaftlich nachteilig sein.

Vor diesem Hintergrund liegt der Erfindung die Aufgabe zugrunde, eine Vorrichtung und ein Verfahren zu schaffen, mit denen ein Fahrzeug mit einem automatischen Getriebe mit geringem Kraftstoffverbrauch bei hoher Flexibilität hinsichtlich der Bedienbarkeit des Getriebes betreibbar ist.

Die Lösung dieser Aufgabe ergibt sich für die Vorrichtung aus den Merkmalen des Hauptanspruchs und für das Verfahren aus dem unabhängigen Anspruch 14, während vorteilhafte Ausgestaltungen und Weiterbildungen der Erfindung den Unteransprüchen entnehmbar sind.

Der Erfindung liegt die Erkenntnis zugrunde, dass für einen geringen Kraftstoffverbrauch bei hoher Flexibilität beispielsweise bezüglich des Fahrstils des Fahrers ein vollautomatischer Betrieb eines automatischen Getriebes in einer überwiegenden Mehrzahl von Situationen geeignet, sowie ein Wechsel in einen manuellen Getriebebetrieb nur in Ausnahmefällen sinnvoll ist. Ein solcher Ausnahmefall ist zum Beispiel das Unterschreiten einer vorbestimmten geringen Grenzgeschwindigkeit und/oder der Rangierbetrieb, insbesondere eines Nutzfahrzeuges.

Demnach geht die Erfindung aus von einer Vorrichtung zur Steuerung eines automatischen Getriebes in einem Kraftfahrzeug, wobei die Vorrichtung eine Steuereinheit aufweist, von welcher Signale empfangbar sind, die von einem Gangwählhebel und/oder einer ersten Getriebesteuerung veranlasst sind, wobei die Signale der ersten Getriebesteuerung so überbrückbar sind, dass das automatische Getriebe manuell betreibbar ist. Zudem ist vorgesehen, dass mit der Vorrichtung ein manuelles Betreiben des automatischen Getriebes nur dann möglich ist, wenn das Fahrzeug eine Geschwindigkeit aufweiset, welche kleiner als eine vorbestimmte Grenzgeschwindigkeit ist.

Eine solche Grenzgeschwindigkeit kann zum Beispiel bei Steigungen, bei starkem Gefälle, beim Einparken oder Rangieren unterschritten werden. Mit der erfindungsgemäßen Vorrichtung ist der Fahrer des Fahrzeuges dann in der Lage, den vollautomatischen Betrieb des automatischen Getriebes durch eine manuelle Gangwahl zu überbrücken, also das automatische Getriebe manuell schalten zu können. Wird diese Grenzgeschwindigkeit überschritten, so ist nur noch ein vollautomatischer Betrieb des automatischen Getriebes möglich, wodurch ein effizientes Ausnutzen der Motorleistung erzielt wird. Dies wird insbesondere hinsichtlich einer besonders wirtschaftlichen Fahrbetriebsweise als vorteilhaft beurteilt.

Ein manuelles Betreiben des automatischen Getriebes wird zudem zugelassen, wenn eine Störung in der Getriebesteuerung oder des Getriebes selbst festgestellt wird.

Zudem kann bevorzugt vorgesehen sein, dass ein manuelles Betreiben des automatischen Getriebes nur dann möglich ist, wenn der Getriebewählhebel eine andere Stellung als eine "Vorwärtsgangrichtung" einnimmt. Dies ist vorteilhaft, da somit in der Vorwärtsgangrichtung, zum Beispiel bei der Wählthebelstellung "D", nur noch ein vollautomatischer Betrieb des automatischen Getriebes möglich ist. Damit erhöht sich der prozentuale Fahranteil im Automatikprogramm eines automatischen Getriebes beträchtlich. Die Grenzgeschwindigkeit für den Vorwärtsfahrbetrieb, unterhalb der ein manuelles Betreiben des automatischen Getriebes bei dieser Ausführungsform noch möglich ist, liegt somit bei 0 km/h.

Des weiteren kann vorgesehen sein, dass ein manuelles Schalten des automatischen Getriebes nur dann möglich ist, wenn der Getriebewählhebel eine andere Stellung als die "Vorwärtsgangrichtung" und/oder die "Rückwärtsgangrichtung" einnimmt. Damit ist ein vollautomatischer Betrieb des Getriebes bei Vorwärtsgangrichtung und Rückwärtsgangrichtung des Getriebewählhebels vorgegeben. Ein manuelles Schalten der Gänge wird nur im Stillstand des Fahrzeuges oder dann erlaubt, wenn ein Fehler vorliegt. Damit beträgt der prozentuale Fahranteil im Automatikprogramm "D" und "R" eines automatischen Getriebes 100 %.

Außerdem kann bevorzugt vorgesehen sein, dass die Vorrichtung ein Speicherbauteil mit wenigstens einem Datenfeld und/oder Schaltprogramm für das automatische Getriebe aufweist, welche für die erste Getriebesteuerung so vorgesehen sind, dass ein Betreiben des Fahrzeuges mit relativ geringem Kraftstoffverbrauch erzielbar ist. Dies ist vorteilhaft, da solche Datenfelder und/oder Schaltprogramme flexibel programmiert und an die jeweiligen Fahrsituationen bzw. Fahrzeugkonfigurationen angepasst werden können.

Zudem kann bevorzugt vorgesehen sein, dass die Vorrichtung Signale, welche durch Betätigung eines Kickdown-Schalters verursacht werden, nicht weiterverarbeitet. Dies ist von Vorteil, da beim Betätigen eines Kick-down-Schalters ein automatisches Getriebe üblicherweise so angesteuert wird, dass eine niedrigere Gangstufe zum Einsatz kommt. Dies ist in der Regel mit einem höheren Kraftstoffverbrauch verbunden. Werden Signale des Kick-down-Schalters von der erfindungsgemäßen Vorrichtung ignoriert, kann ein verbrauchsoptimiertes Betreiben eines Fahrzeuges mit automatischem Getriebe erzielt werden.

Weiter kann vorgesehen sein, dass bei der Stellung des Getriebewählhebels in der Rückwärtsgangrichtung "R" das Fahrzeug nur mit einem spezifischen Rückwärtsgang von mehreren Rückwärtsgängen betreibbar ist. Weist etwa ein automatisches Getriebe eines Nutzfahrzeugs mehrere Rückwärtsgänge auf, so ist diese Ausführungsform der Erfindung im Hinblick auf ein verbrauchsoptimiertes Betreiben des Fahrzeuges vorteilhaft, wenn zum Beispiel stets der höchstmögliche Rückwärtsgang gewählt wird. Sollte eine schwierige Rangiersituation vorliegen, so kann der Fahrer durch Unterschreiten der Grenzgeschwindigkeitsschwelle den Automatikmodus übersteuern und manuell beispielsweise den kleinsten Rückwärtsgang einlegen.

Außerdem kann mit Vorteil vorgesehen sein, dass von der Vorrichtung gemäß der Erfindung Signale wenigstens einer weiteren Getriebesteuerung empfangbar sind, wobei die Signale der weiteren Getriebesteuerung so überbrückbar sind, dass das automatische Getriebe unabhängig von der Fahrzeuggeschwindigkeit oder Wählhebelstellung manuell schaltbar ist. Dies ist vorteilhaft, da somit zum Beispiel bei einem Defekt eine weitere Getriebesteuerung zur Verfügung steht, welche die volle Flexibilität bei der Gangwahl zulässt. In einem solchen Fall bestehen keine Einschränkungen, so dass das Fahrzeug in allen Gängen und im gesamten Drehzahlbereich des Motors mit einer manuellen Gangwahl betrieben werden kann.

Zudem wird es als vorteilhaft erachtet, wenn eine Auswahl aus Signalen entweder der ersten Getriebesteuerung oder aus Signalen einer weiteren Getriebesteuerung erzielbar ist. Dies ist sinnvoll, da somit ein Betrieb des Fahrzeuges mit dem automatischen Getriebe alternativ mit der ersten Getriebesteuerung oder einer weiteren Getriebesteuerung möglich ist.

Weiter kann bevorzugt vorgesehen sein, dass die Auswahl aus Signalen entweder der ersten Getriebesteuerung oder einer weiteren Getriebesteuerung mittels eines Schalters durchführbar ist. Dies ist vorteilhaft, da somit der Fahrer zum Beispiel mittels eines Wählschalters manuell je nach Fahrsituation, Beladungszustand des Fahrzeuges oder anderer Parameter die jeweils geeignete Getriebesteuerung auswählen kann.

Getriebesteuerungen im Sinne der Erfindung können sowohl aus jeweiligen Hardware-Einheiten bestehen als auch aus jeweiligen Software-Funktionen abgebildet sein. So können zwei oder mehr Getriebesteuerungen vorgesehen sein, die jeweils alternative Betriebsmodi beinhalten.

Zudem kann bevorzugt vorgesehen sein, dass die Vorrichtung zur Steuerung eines automatischen Getriebes für Nutzfahrzeuge ausgebildet ist. Dies ist von Vorteil, weil Nutzfahrzeuge eine sehr hohe Laufleistung aufweisen und ein verbrauchsoptimiertes Betreiben des Fahrzeuges mit einem signifikanten wirtschaftlichen Vorteil verbunden ist.

Die Erfindung betrifft ferner ein Verfahren zur Steuerung eines automatischen Getriebes für ein Kraftfahrzeug mittels einer Vorrichtung, wie sie vorstehend beschrieben worden ist.

Die Erfindung lässt sich anhand von Ausführungsbeispielen und einer der Beschreibung beigefügten Zeichnung weiter erläutern. In dieser zeigt:
- Fig. 1: eine schematische Darstellung einer Ausführungsform eines Aufbaus der erfindungsgemäßen Vorrichtung, sowie
- Fig. 2a, 2b: ein Ablaufdiagramm mit einzelnen Verfahrensschritten zur Steuerung eines automatischen Getriebes gemäß der Erfindung.

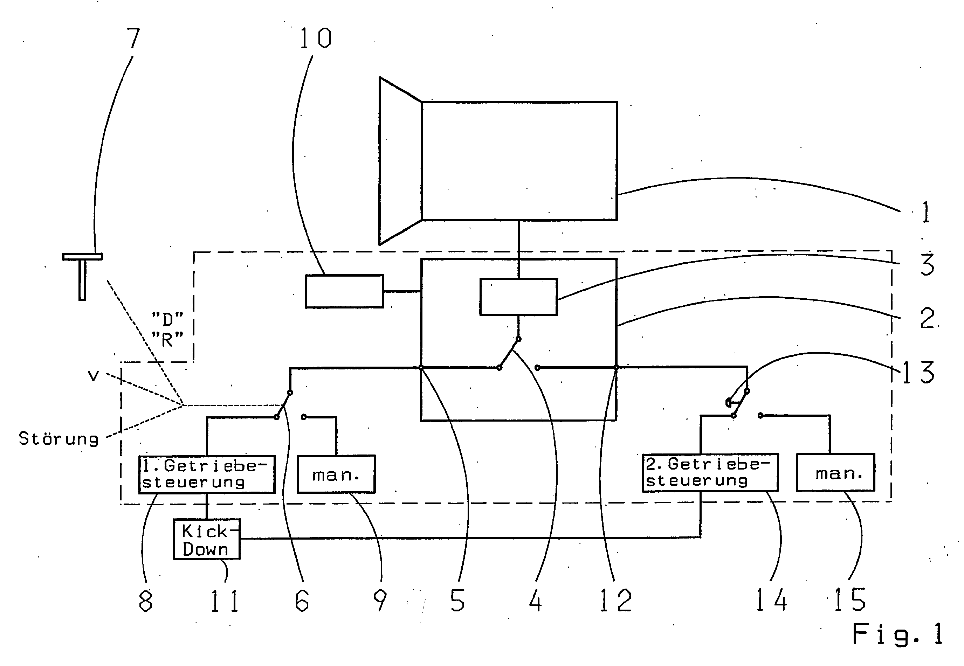

Fig. 1 zeigt demnach eine schematische Darstellung einer Ausführungsform der erfindungsgemäßen Steuerungsvorrichtung, die Bestandteil eines Getriebesteuerungsgerätes sein kann. Ein automatisches Getriebe 1 wird dabei von einer Steuereinheit 2 angesteuert, welche ein Steuermodul 3 aufweist. Mittels des Steuermoduls 3 werden über Schaltventile Schaltelemente, wie hydraulische oder pneumatische Schaltglieder oder elektromotorische, elektromechanische, elektromagnetische Stellelemente oder Lamellenkupplungen oder Bremsen des Getriebes betätigt, wodurch Übersetzungsänderungen des Getriebes eingestellt werden.

Die Steuereinheit 2 weist ferner einen Schalter 4 auf, welcher bei dieser Ausführungsform zwischen zwei Schaltpositionen schalten kann. Der Schalter 4, welcher mechanisch oder elektronisch, z. B. mittels einer Software, schaltbar ist, kann beispielsweise mittels eines Schlüssels betätigt werden, welcher extern etwa vom Fahrer in einem Schlossschalter gedreht wird. Der Schalter kann auch als Software-Schalter ausgeführt sein. Mit dem Schalter 4 kann ein Eingang 5 der Steuereinheit 2 angesteuert werden.

Mit dem Eingang 5 ist eine erste Getriebesteuerung 8 verbunden, welche mittels eines Schalters 6 zur Steuereinheit 2 zugeschaltet oder von dieser getrennt werden kann: Die Position des Schalters 6 ist bei dieser Ausführungsform von der Position eines Wählhebels 7 abhängig, mit welchem eine grobe Vorauswahl der automatisch zu wählenden Gangstufen des automatischen Getriebes vorgenommen wird. Wenn der Wählhebel zum Beispiel auf der Position "D" steht, ist eine Fahrt des Fahrzeuges in Vorwärtsgangrichtung möglich. Bei der Wählhebelstellung "R" wird das automatische Getriebe 1 so geschaltet, dass nur Rückwärtsgänge vorgesehen sind.

Ein anderer Parameter für die Position des Schalters 6 kann auch die Fahrzeuggeschwindigkeit v sein. Liegt die Geschwindigkeit v oberhalb eines vorbestimmten Grenzwertes, wird die erste Getriebesteuerung 8 zugeschaltet. Unterhalb des Grenzwertes kann es hingegen zugelassen sein, dass das automatische Getriebe 1 nicht nur mittels der ersten Getriebesteuerung 8 angesteuert, sondern auf Wunsch des Fahrers durch eine manuelle Gangwahl 9 betrieben wird. Der Schalter 6 kann mechanisch oder elektronisch ausgebildet sein, und bei der letzteren Variante z.B. mittels einer Software schaltbar sein.

Die Vorrichtung kann ferner ein Speicherbauteil 10 aufweisen, in welchem Schaltprogramme und/oder Datenfelder für die Steuerungsaufgaben des automatischen Getriebes hinterlegt sind. Diese Schaltprogramme und/oder Datenfelder können so ausgebildet sein, dass ein Betreiben des Fahrzeuges mit relativ geringem Kraftstoffverbrauch erzielbar ist. Bei manueller Gangwahl werden diese Datenfelder nicht weiter berücksichtigt.

Gemäß einer weiteren Ausführungsform der erfindungsgemäßen Vorrichtung kann die erste Getriebesteuerung 8 auch mit einem Kick-down-Schalter 11 verbunden sein. Bei vollständigem Durchtreten des Gaspedals (Kick-down), beispielsweise zur Einleitung eines Überholmanövers, erfolgt, soweit möglich, eine Rückschaltung um einen oder mehrere Gänge. Die geschalteten Gänge werden dann jeweils bis etwa zur Motorhöchstdrehzahl ausgefahren, um das Beschleunigungsverhalten des Fahrzeuges zu verbessern. Soll ein verbrauchsoptimiertes Fahren möglich sein, werden Signale des Kickdown-Schalters 11 von der ersten Getriebesteuerung 8 nicht berücksichtigt. Um eine höhere Flexibilität des Fahrstils zu erreichen, können diese Signale des Kick-down-Schalters 11 in einer anderen Variante der Erfindung jedoch zugelassen sein.

Wie aus Fig. 1 ersichtlich ist, kann der Schalter 4 auch in eine andere Position verlagert werden, so dass eine Verbindung zum Eingang 12 der Steuereinheit 2 besteht. Am Eingang 12 kann eine zweite Getriebesteuerung 14 angeschlossen sein, welche entweder die einzige verfügbare Getriebesteuerung oder als Alternative zur ersten Getriebesteuerung 8 vorgesehen ist. Wie bei der ersten Getriebesteuerung 8 ist auch bei der zweiten Getriebesteuerung 14 eine Umschaltung von der automatischen zur manuellen Gangwahl möglich.

Das Umschalten von der zweiten Getriebesteuerung 14 zur manuellen Gangwahl 15 kann zum Beispiel mittels eines Wählhebels 13 erfolgen. Dabei ist es möglich, dass der Wählhebel 13 zu jeder Zeit bei jeder Fahrsituation und bei jedem Fahrstil betätigt werden kann, so dass eine Änderung des Getriebebetriebs von einer automatischen Getriebesteuerung zu einer manuellen Gangwahl stets durchführbar ist. Die zweite Getriebesteuerung 14 kann als Standardausrüstung im Fahrzeug vorgesehen sein, während die erste Getriebesteuerung 8 sowie ein zugehöriges Speicherbauteil 10 zusätzlich vorgesehen sein können.

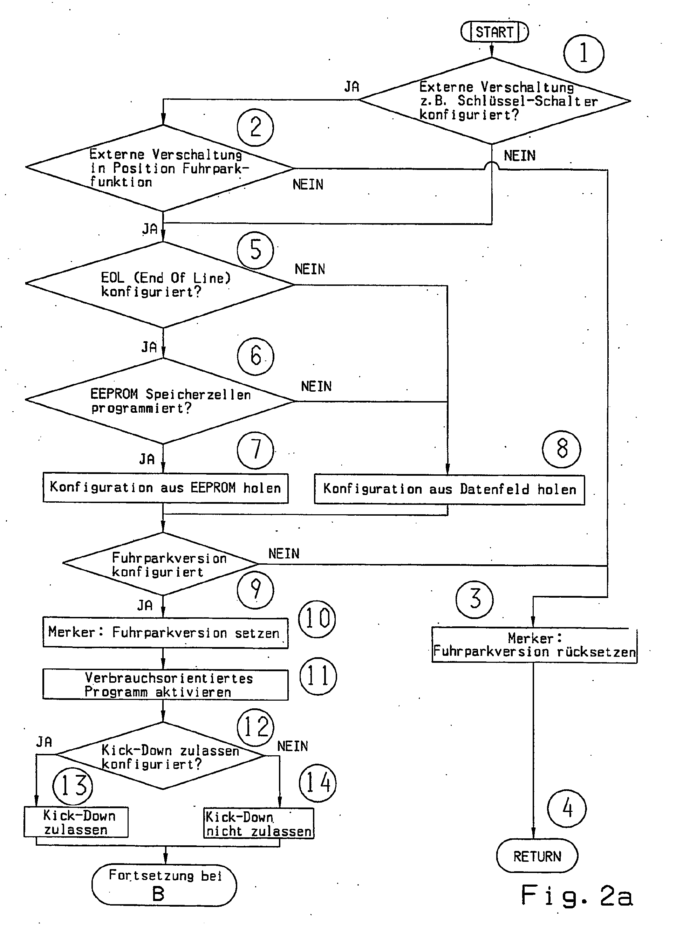

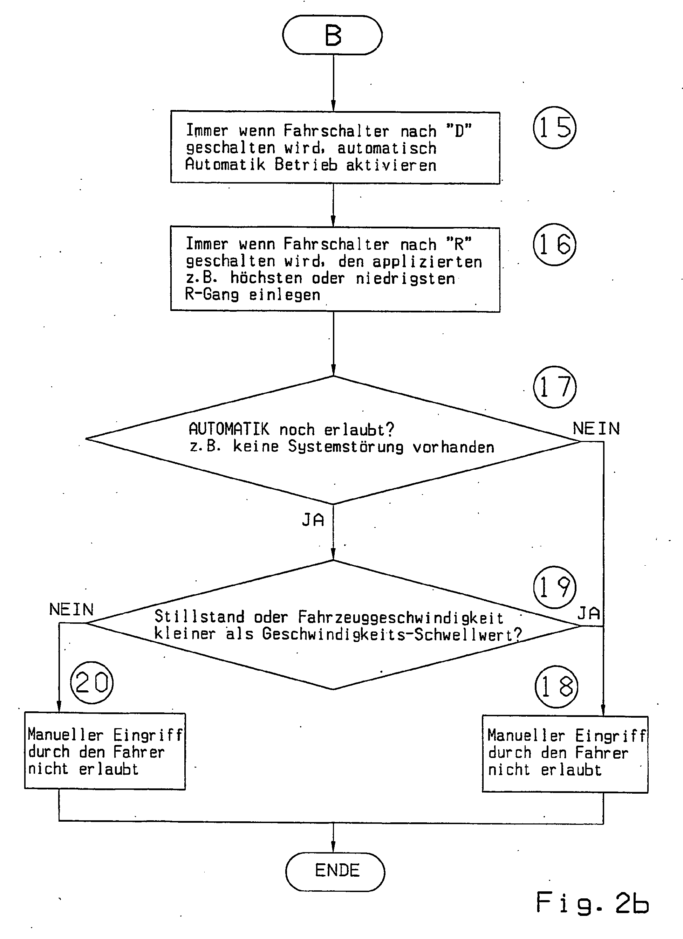

In den Fig. 2a und 2b ist jeweils ein Fluss- bzw. Ablaufdiagramm dargestellt, mit welchem eine Ausführungsform eines Verfahrens zur Steuerung eines automatischen Getriebes eines Fahrzeuges vorgestellt wird. Die einzelnen Verfahrensschritte in den Figuren 2a und 2b sind mit in einem Kreis versehenen Nummern bezeichnet. In der nachfolgenden Beschreibung sind diese Schritte jeweils mit einem vorangestellten "S" markiert.

Das Steuerungsverfahren kann gestartet werden, indem beispielsweise die Spannungsversorgung des Getriebesteuerungsgerätes eingeschaltet wird, etwa durch Einschalten der Fahrzeug-Zündung. In Schritt S1 wird überprüft, ob eine externe Verschaltung z. B. mittels eines Schlüsselschalters konfiguriert ist. Ist dies der Fall, wird ein externes Signal wie zum Beispiel ein elektrischer Spannungspegel eingelesen.

In Schritt S2 kann dabei überprüft werden, welche Höhe dieser Spannungspegel aufweist. Entspricht der Spannungspegel einer zuvor bestimmten Position "Fuhrparkversion", so wird damit signalisiert, dass die Steuereinheit Signale einer Getriebesteuerung verarbeiten kann, welche besonders auf die Anforderungen von Nutzfahrzeugen bzw. eines Fuhrparkuntemehmens abgestimmt ist. Entspricht der Spannungspegel beim Schritt S2 nicht der Definition für die Anwahl der Fuhrparkversion, so wird der entsprechende Merker (Flag) zurückgesetzt, so dass ein Betrieb gemäß der Fuhrparkversion nicht erlaubt ist (Schritt S3).

Als Folge davon wird in Schritt S4 eine Getriebesteuerung verwendet, welche die Eigenschaften der Fuhrparkversion nicht aufweist. Dies kann eine konventionelle Getriebesteuerung wie zum Beispiel die zweite Getriebesteuerung 14 gemäß Fig. 1 sein, bei welcher eine manuelle Gangwahl unabhängig von der Stellung des Getriebewählhebels 7 oder der Fahrzeuggeschwindigkeit v möglich ist. Entspricht der Spannungspegel bei Schritt S2 der Definition für die Anwahl der Fuhrparkversion, folgt als nächster Verfahrensschritt der Schritt S5 (siehe weiter unten).

Wird in Schritt S1 festgestellt, dass eine externe Verschaltung nicht konfiguriert ist, erfolgt zunächst kein Rückschalten in ein konventionelles Getriebesteuerprogramm. Vielmehr wird in einem Schritt S5 geprüft, ob eine End-of-line-Konfiguration vorliegt. Bei einer End-of-line (EOL)-Programmierung werden am Bandende bei der Getriebe- oder Fahrzeugproduktion in einer Fabrik erforderliche Programme in das relevante Steuergerät des Getriebes bzw. Fahrzeugs eingelesen. Eine nachträgliche Änderung oder Erweiterung der Fahrzeugprogrammierung kann nur mittels zulässiger Autorisierung vorgenommen werden.

Ist eine Konfiguration für eine solche EOL-Programmierung aktiviert, so wird in Schritt S6 überprüft, ob über ein geeignetes zugelassenes Programmiertool die entsprechenden Zellen in einem Speicherbaustein EEPROM programmiert wurden. Liegen in diesem EEPROM gültige Konfigurationswerte vor, Schritt S7, so werden diese zur weiteren Programmentscheidung herangezogen. Ist die Konfiguration für ein EOL-Programm nicht aktiviert und/oder sind entsprechende Zellen im EEPROM nicht programmiert worden, werden die Daten aus einem anderen Datenfeld der Getriebesteuerung ausgelesen, Schritt S8.

In einem Schritt S9 wird überprüft, ob die aus dem jeweiligen Datenfeld stammenden Daten eine Fuhrparkversion konfigurieren. Ist dies nicht der Fall, so wird zu Schritt S3 zurückgekehrt, in welchem der Merker für die Führparkversion zurückgesetzt wird. Anschließend wird zur normalen Getriebesteuerung, in Fig. 1 die zweite Getriebesteuerung 14, zurückgekehrt. Wurde eine Fuhrparkversion konfiguriert, so wird in Schritt S10 ein Merker für die Fuhrparkversion gesetzt. Somit wird zugelassen, dass die für eine Fuhrparkversion vorgesehenen Schaltprogramme und/oder Daten zum Einsatz kommen.

Um die Funktionalität "Fuhrparkversion" bezüglich des Kraftstoffverbrauchs maximal auszuschöpfen, erfolgt nun bei dieser Ausführungsform ein automatisches Umschalten in einen kraftstoffverbrauchsoptimierten Datenbereich der Getriebesteuerung (Schritt S11).

In Schritt S12 wird geprüft, ob die Funktion Kickdown (Rückschaltanforderung bei durchgetretenem Gaspedal durch den Fahrer) zugelassen wird (Schritt S13), oder nicht zugelassen wird (Schritt S14). Wird die Kick-down-Funktion nicht zugelassen, ist ein weiteres verbrauchsoptimiertes Betreiben des Fahrzeuges möglich.

Anschließend wird geprüft, in welcher Position sich der Getriebewählhebel 7 befindet. Wenn der Wählhebel in der Position "Vorwärtsgangrichtung" (zum Beispiel "D") steht, wird grundsätzlich der Automatikbetrieb für das automatische Getriebe vorgenommen. Ein manueller Eingriff bzw. ein Gangwechsel durch den Fahrer ist bei der Fuhrparkversion damit ausgeschlossen, siehe Schritt S15. Wenn der Wählhebel in Position "R" für "Rückwärtsgangrichtung" steht, kann bei einer Ausführungsform ein spezieller Rückwärtsgang eines mehrere Rückwärtsgänge aufweisenden Nutzfahrzeuggetriebes gewählt werden. Dieser Rückwärtsgang kann zum Beispiel der nächsthöhere oder der nächstniedrigere Rückwärtsgang sein, Schritt S16.

Wird eine Systemstörung bei der Getriebesteuerung erkannt (Schritt S17), so wird ein manueller Eingriff bzw. ein Gangwechsel durch den Fahrer zugelassen, Schritt S18. Liegt keine Systemstörung vor, wird in Schritt S19 überprüft, ob das Fahrzeug steht oder ob die Fahrzeuggeschwindigkeit v kleiner als ein vorbestimmter Geschwindigkeitsschwellwert ist. Ist dies erfüllt, wird ebenfalls ein manueller Eingriff durch den Fahrer zugelassen. Anderenfalls ist ein manueller Eingriff durch den Fahrer nicht zugelassen (Schritt S20).

### Bezugszeichen

- 1: automatisches Getriebe
- 2: Steuereinheit
- 3: Steuermodul
- 4: Schalter
- 5: Eingang
- 6: Schalter
- 7: Getriebewählhebel
- 8: erste Getriebesteuerung
- 9: manuelle Gangwahl
- 10: Speicherbauteil
- 11: Kick-down-Schalter
- 12: Eingang
- 13: Taster
- 14: zweite Getriebesteuerung
- 15: manuelle Gangwahl

- D: Vorwärtsfahrstufe
- R: Rückwärtsfahrstufe
- v: Geschwindigkeit

## Patentansprüche

1. Vorrichtung zur Steuerung eines automatischen Getriebes (1) in einem Kraftfahrzeug, welches eine Steuereinheit (2) aufweist, von welcher Signale empfangbar sind, die von einem Getriebewählhebel (7) und/oder einer ersten Getriebesteuerung (8) veranlasst sind, wobei die Signale der ersten Getriebesteuerung (8) so überbrückbar sind, dass das automatische Getriebe (1) manuell betreibbar ist, **dadurch gekennzeichnet, dass** ein manuelles Betreiben des automatischen Getriebes (1) nur dann möglich ist, wenn das Fahrzeug eine Geschwindigkeit (v) aufweist, welche kleiner als eine vorbestimmte Grenzgeschwindigkeit ist.

2. Vorrichtung nach Anspruch 1, **dadurch gekennzeichnet, dass** ein manuelles Betreiben des automatischen Getriebes (1) nur dann möglich ist, wenn der Getriebewählhebel (7) eine andere Stellung als die "Vorwärtsgangrichtung D" einnimmt.

3. Vorrichtung nach den Ansprüchen 1 oder 2, **dadurch gekennzeichnet, dass** ein manuelles Betreiben des automatischen Getriebes (1) nur dann möglich ist, wenn der Getriebewählhebel (7) eine andere Stellung als die "Vorwärtsgangrichtung D" und/oder "Rückwärtsgangrichtung R" einnimmt.

4. Vorrichtung nach Anspruch 1, **dadurch gekennzeichnet, dass** ein manuelles Betreiben des automatischen Getriebes (1) nur dann möglich ist, wenn sich das Fahrzeug im Stillstand befindet und/oder ein Fehler in der Steuerung und/oder im automatischen Getriebe festgestellt wird.

5. Vorrichtung nach einem der vorherigen Ansprüche, **dadurch gekennzeichnet, dass** die Vorrichtung ein Speicherbauteil (10) mit Steuerungsprogrammen und/oder Datenfeldern aufweist, welche für die erste Getriebesteuerung (8) so vorgesehen ist, dass ein Betreiben des Fahrzeuges mit relativ geringem Kraftstoffverbrauch erzielbar ist.

6. Vorrichtung nach einem der vorherigen Ansprüche, **dadurch gekennzeichnet, dass** die Vorrichtung Signale, welche durch Betätigung eines Kick-down-Schalters (11) verursacht werden, nicht weiterverarbeitet.

7. Vorrichtung nach einem der vorherigen Ansprüche, **dadurch gekennzeichnet, dass** bei Stellung des Getriebewählhebels (11) in Rückwärtsgangrichtung "R" das Fahrzeug nur mit einem spezifischen Rückwärtsgang von mehreren Rückwärtsgängen betreibbar ist.

8. Vorrichtung nach einem der vorherigen Ansprüche, **dadurch gekennzeichnet, dass** von der Vorrichtung Signale wenigstens einer weiteren Getriebesteuerung (14) empfangbar sind, wobei die Signale der weiteren Getriebesteuerung (14) so überbrückbar sind, dass das automatische Getriebe (1) unabhängig von der Fahrzeuggeschwindigkeit (v) oder der Wählhebelstellung manuell betreibbar ist.

9. Vorrichtung nach Anspruch 8, **dadurch gekennzeichnet, dass** eine Auswahl aus Signalen entweder der ersten Getriebesteuerung (8) oder aus Signalen der weiteren Getriebesteuerung (14) erzielbar ist.

10. Vorrichtung nach Anspruch 9, **dadurch gekennzeichnet, dass** die Auswahl aus Signalen entweder der ersten Getriebesteuerung (8) oder der weiteren Getriebesteuerung (14) mittels eines Schalters (4) durchführbar ist.

11. Vorrichtung nach Anspruch 10, **dadurch gekennzeichnet, dass** der Schalter (4) als Schlüsselschalter ausgebildet und in der Fahrzeugkabine des Fahrzeugs angeordnet ist.

12. Vorrichtung nach Anspruch 10, **dadurch gekennzeichnet, dass** der Schalter (4) als Programmschalter ausgebildet ist, welcher am Ende der Fahrzeug- oder Getriebeproduktion oder beim Kunden durch eine Programmiervorrichtung anwenderspezifisch schaltbar ist.

13. Vorrichtung nach einem der vorherigen Ansprüche, **dadurch gekennzeichnet, dass** die Vorrichtung zur Steuerung eines automatikschen Getriebes eines Nutzfahrzeuges ausgebildet ist.

14. Verfahren zur Steuerung eines automatischen Getriebes mittels einer Vorrichtung gemäß einem der Ansprüche 1 bis 13.

15. Verfahren nach Anspruch 14, **dadurch gekennzeichnet, dass** eine Umschaltung der Steuerung des automatischen Getriebes von einer automatischen Steuerung zu einer manuell betätigbaren Steuerung erst dann zugelassen wird, wenn das Fahrzeug mit einer Geschwindigkeit (v) fährt, welche kleiner als eine vorbestimmte Grenzgeschwindigkeit ist, oder wenn ein Störfall in der Steuerung und/oder dem automatischen Getriebe selbst festgestellt wurde.

16. Verfahren nach Anspruch 14, durch **gekennzeichnet,** dass die Steuerungsfunktion des Anspruchs 15 durch Einstellen eines Schalters (4) erfolgt, welcher manuell durch den Nutzer des Fahrzeugs, oder durch ein Programmiergerät geschaltet wird.

## Claims

1. Device for controlling an automatic transmission (1) in a motor vehicle, which automatic transmission (1) has a control unit (2) from which signals, which are brought about by a transmission selector lever (7) and/or a first transmission controller (8), can be received, wherein the signals of the first transmission controller (8) can be bypassed in such a way that the automatic transmission (1) can be operated manually, **characterized in that** manual operation of the automatic transmission (1) is possible only if the vehicle has a velocity (v) which is lower than a predetermined limiting velocity.

2. Device according to Claim 1, **characterized in that** manual operation of the automatic transmission (1) is possible only if the transmission selector lever (7) assumes a position other than the "forward gear speed direction D"

3. Device according to Claims 1 or 2, **characterized in that** manual operation of the automatic transmission (1) is possible only if the transmission selector lever (7) assumes a position other than the "forward gear speed direction D" and/or "reverse gear speed direction R".

4. Device according to Claim 1, **characterized in that** manual operation of the automatic transmission (1) is possible only if the vehicle is in the stationary state and/or a fault is detected in the controller and/or in the automatic transmission.

5. Device according to one of the preceding claims, **characterized in that** the device has a memory component (10) with control programs and/or data fields, which device is provided for the first transmission controller (8) in such a way that the vehicle can be operated with relatively low fuel consumption.

6. Device according to one of the preceding claims, **characterized in that** the device does not carry out further processing on signals which are caused by activation of a kick-down switch (11).

7. Device according to one of the preceding claims, **characterized in that** when the transmission selector lever (11) is in the reverse gear speed direction "R" the vehicle can be operated only with one specific reverse gear speed of a plurality of reverse gear speeds.

8. Device according to one of the preceding claims, **characterized in that** signals of at least one further transmission controller (14) can be received by the device, wherein the signals of the further transmission controller (14) can be bypassed in such a way that the automatic transmission (1) can be operated manually independently of the velocity (v) of the vehicle or the position of the selector lever.

9. Device according to Claim 8, **characterized in that** a selection can be made either from signals of the first transmission controller (8) or from signals of the further transmission controller (14).

10. Device according to Claim 9, **characterized in that** the selection can be made either from signals of the first transmission controller (8) or from signals of the further transmission controller (14) by means of a switch (4).

11. Device according to Claim 10, **characterized in that** the switch (4) is embodied as a key switch and is arranged in the vehicle cab of the vehicle.

12. Device according to Claim 10, **characterized in that** the switch (4) is embodied as a program switch which can be switched on a user-specific basis by a programming device at the end of the production of the vehicle or transmission or at the customer's premises.

13. Device according to one of the preceding claims, **characterized in that** the device is designed to control an automatic transmission of a utility vehicle.

14. Method for controlling an automatic transmission by means of a device according to one of Claims 1 to 13.

15. Method according to Claim 14, **characterized in that** switching over of the controller of the automatic transmission from automatic control to a manually activated control is not permitted until the vehicle is travelling at a velocity (v) which is lower than a predetermined limiting velocity or if a fault has been detected in the controller and/or the automatic transmission itself.

16. Method according to Claim 14, **characterized in that** the control function of Claim 15 is carried out by setting a switch (4) which is switched manually by the user for the vehicle or by means of a programming device.

## Revendications

1. Dispositif pour commander une boîte de vitesses automatique (1) dans un véhicule automobile, qui présente une unité de commande (2), qui peut recevoir des signaux qui proviennent d'un levier de sélection de boîte de vitesses (7) et/ou d'une première commande de boîte de vitesses (8), les signaux de la première commande de boîte de vitesses (8) pouvant être surmontés de telle sorte que la boîte de vitesses automatique (1) puisse être commandée manuellement, **caractérisé en ce qu'**une commande manuelle de la boîte de vitesses automatique (1) n'est possible que lorsque le véhicule présente une vitesse (v) inférieure à une vitesse limite prédéterminée.

2. Dispositif selon la revendication 1, **caractérisé en ce qu'**une commande manuelle de la boîte de vitesses automatique (1) n'est possible que lorsque le levier de sélection de boîte de vitesses (7) prend une autre position que la position "sens de marche avant D".

3. Dispositif selon la revendication 1 ou 2, **caractérisé en ce qu'**une commande manuelle de la boîte de vitesses automatique (1) n'est possible que lorsque le levier de sélection de boîte de vitesses (7) prend une autre position que la position "sens de marche avant D" et/ou "sens de marche arrière R".

4. Dispositif selon la revendication 1, **caractérisé en ce qu'**une commande manuelle de la boîte de vitesses automatique (1) n'est possible que lorsque le véhicule se trouve à l'arrêt et/ou lorsqu'une erreur de commande et/ou de la boîte de vitesses automatique est constatée.

5. Dispositif selon l'une quelconque des revendications précédentes, **caractérisé en ce que** le dispositif présente un composant accumulateur (10) avec des programmes de commande et/ou des champs de données qui sont prévus pour la première commande de boîte de vitesses (8), de telle sorte qu'une commande du véhicule avec une consommation de carburant relativement faible puisse être obtenue.

6. Dispositif selon l'une quelconque des revendications précédentes, **caractérisé en ce que** le dispositif ne traite pas les signaux qui proviennent de l'actionnement d'un contacteur de kickdown (11).

7. Dispositif selon l'une quelconque des revendications précédentes, **caractérisé en ce que** lorsque le levier de sélection de boîte de vitesses (11) se trouve dans la position sens de marche arrière "R", le véhicule ne peut être commandé qu'avec une vitesse de marche arrière spécifique parmi plusieurs vitesses de marche arrière.

8. Dispositif selon l'une quelconque des revendications précédentes, **caractérisé en ce que** des signaux d'au moins une autre commande de boîte de vitesses (14) peuvent être reçus par le dispositif, les signaux de l'autre commande de boîte de vitesses (14) pouvant être surmontés de telle sorte que la boîte de vitesses automatique (1) puisse être commandée manuellement indépendamment de la vitesse du véhicule (v) ou de la position du levier de sélection.

9. Dispositif selon la revendication 8, **caractérisé en ce qu'**une sélection de signaux de la première commande de boîte de vitesses (8) ou de signaux de l'autre commande de boîte de vitesses (14) peut être obtenue.

10. Dispositif selon la revendication 9, **caractérisé en ce que** la sélection de signaux de la première commande de boîte de vitesses (8) ou de l'autre commande de boîte de vitesses (14) peut être effectuée au moyen d'un contacteur (4).

11. Dispositif selon la revendication 10, **caractérisé en ce que** le contacteur (4) est réalisé sous forme de contacteur à clé, et est disposé dans la cabine de conduite du véhicule.

12. Dispositif selon la revendication 10, **caractérisé en ce que** le contact (4) est réalisé sous forme de sélecteur de programme, qui peut être commuté à la fin de la production du véhicule ou de la boîte de vitesses ou par le client par un dispositif de programmation, de manière spécifique à l'utilisateur.

13. Dispositif selon l'une quelconque des revendications précédentes, **caractérisé en ce que** le dispositif est réalisé pour commander une boîte de vitesses automatique d'un véhicule utilitaire.

14. Procédé pour commander une boîte de vitesses automatique au moyen d'un dispositif selon l'une quelconque des revendications 1 à 13.

15. Procédé selon la revendication 14, **caractérisé en ce qu'**une inversion de la commande de la boîte de vitesses automatique d'une commande automatique à une commande manuelle n'est autorisée que lorsque le véhicule circule à une vitesse (v) qui est inférieure à une vitesse limite prédéterminée, ou lorsqu'une perturbation de la commande et/ou de la boîte de vitesses automatique elle-même a été constatée.

16. Procédé selon la revendication 14, **caractérisé en ce que** la fonction de commande de la revendication 15 s'effectue par ajustement d'un contacteur (4) qui est commuté manuellement par l'utilisateur du véhicule, ou par un appareil de programmation.
